# EUROPEAN PATENT APPLICATION

(11) **EP 2 512 138 A2**
(43) Date of publication of application: **17.10.2012**
(21) Application number: 12163047.9
(22) Date of filing: 03.04.2012
(51) Int. Cl.: H04N 7/26

(54) **Scalable video codec encoder device and methods thereof**

(30) Priority: 11.04.2011 US 201113084142
(71) Applicant: ViXS Systems Inc., Toronto, ON M2K 1E3 (CA)
(72) Inventor: Wang, Limin, Richmond Hill, Ontario L4E 4N5 (CA); Yang, Yinxia Michael, Richmond Hill, Ontario L4E 5C1 (CA); Zhang, Xiangjun, Richmond Hill, Ontario L4E 4G7 (CA); Guo, Xin, Toronto, Ontario M5G 2R2 (CA); Zhao, Xu Gang, Maple, Ontario L6A 3S1 (CA)
(74) Representative: Benson, Christopher

(57) **Abstract**

Encoding a video signal according to a scalable video coding (SVC) technique employs two different encoding paths for the base layer and the enhancement layers respectively, whereby the two encoding paths share common hardware encoding modules. For example, a control module can route received video information associated with the base layer directly to the hardware encoder modules for encoding, while routing video information associated with the enhancement layers to an upscaler. The upscaled video information is then provided to the hardware encoder module for processing in similar fashion to the base layer information. The hardware encoder provides encoded video information to another control module, which determines whether to route the information to a hardware or software entropy encoder, based on whether the encoded video information is associated with the base layer or an enhancement layer, respectively.

## Description

### FIELD OF THE DISCLOSURE

The present disclosure relates generally to video processing and more particularly to video encoding.

### BACKGROUND

Video encoding allows compressed video signals to be transmitted with reduced bandwidth and to be stored in smaller portions of memory. The degree of compression and other processing can affect the quality and resolution of a video image decoded from and encoded video signal. Accordingly, the video signal being encoded is typically encoded with sufficient information to provide for the display resolution, frame rate, and other quality related parameters that can be reproduced by a display device having specific processing and display capabilities. However, in some situations it is desirable to provide a common video stream to different devices that support various processing and display characteristics to limit the amount of processing that needs to be done at the display. For example, in video conferencing, it can be useful to provide each conference node with a copy of a common video signal so that all conference participants are viewing the same video. However, the display devices at the various nodes can have different processing and display capabilities. One approach is to encode the video signal to have the quality parameters associated with the most capable display device and let each of the less capable devices reprocess the video signal to accommodate a lesser video quality. However, this can result in inefficient use of communication bandwidth, as well as place an undesirable processing load on each receiving device.

### SUMMARY OF THE INVENTION

According to aspects of the present invention, there is provided an apparatus and method as set forth in the appended claims.

According to an aspect of the present invention, there is provided a method, comprising: receiving video information from a first hardware encoding module; in response to determining the video information is associated with a base layer of a scalable video stream, processing the video information according to a first entropy encoding process; and in response to determining the video information is associated with an enhancement layer of the scalable video stream, processing the video information according to a second entropy encoding process different than the first entropy encoding process.

Processing the video information according to the first entropy encoding process may comprise processing the video information at a second hardware encoding module and wherein processing the video information according to the second entropy encoding process comprises processing the video information at a software encoding module.

The method may further comprise combining the base layer and the enhancement layer to form the scalable video stream.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram illustrating a video encoder in accordance with one embodiment of the present disclosure.

FIG.2 is a block diagram illustrating the hardware encoder FIG. 1 in accordance with one embodiment of the present disclosure.

FIG. 3 is a flow diagram of a method of encoding a scalable video coding video stream in accordance with one embodiment of the present disclosure.

FIG. 4 is a flow diagram of a method of routing image frames at the video encoder of FIG. 1 in accordance with one embodiment of the present disclosure.

FIG. 5 is a flow diagram of a method of routing encoded video information at the video encoder of FIG. 1 in accordance with one embodiment of the present disclosure.

### DETAILED DESCRIPTION

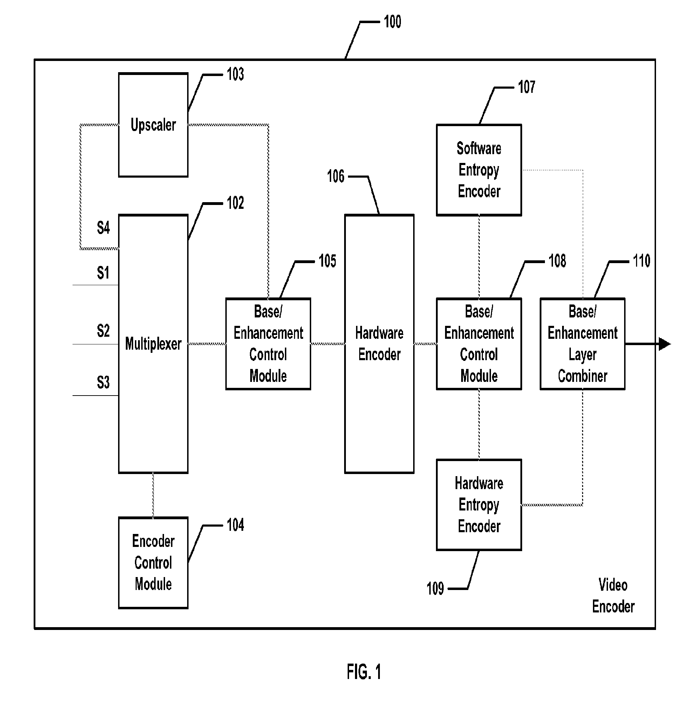

FIGS. 1-5 illustrate exemplary techniques for encoding a video signal according to the scalable video coding (SVC) extension of the H.264 compression standard by employing two different encoding paths for the base layer and the enhancement layers respectively, whereby the two encoding paths share common hardware encoding modules. In particular, a control module can route received video information associated with the base layer directly to the hardware encoder modules for encoding, while routing video information associated with the enhancement layers to an upscaler. The upscaled video information is then provided to the hardware encoder module for processing in similar fashion to the base layer information. The hardware encoder provides encoded video information to another control module, which determines whether to route the information to a hardware or software entropy encoder, based on whether the encoded video information is associated with the base layer or an enhancement layer, respectively. By employing common hardware encoder modules for both the base layer and the enhancement layers, encoding efficiency is enhanced.

To illustrate, an SVC video stream is a video information stream that includes a base layer and one or more enhancement layers. The base layer can be decoded individually to determine a base video stream having minimum quality characteristics, such as resolution and frame rate, associated with the SVC video stream. The enhancement layers can be decoded, in combination with the base layer, to determine a video stream that has enhanced quality characteristics relative to the base video stream. As explained further herein, the base layer and the enhancement layers can be encoded using different respective encoding paths. As used herein, an encoding path refers to the set of processes employed to encode video information, and can include hardware encoding modules, software encoding modules, and any combination thereof. As used herein, a hardware encoding module is a set of hardware that is dedicated to performing one or more processes, such as intra-prediction, motion search, motion refinement, mode decision, motion vector differential, transform and quantization, and the like, employed in encoding a video stream. As used herein, a hardware encoding module does not refer to a general purpose processor programmed to perform a video encoding process, nor does it refer to modules that perform general data communication, data management, memory transfers, or other overhead functions of the video encoder.

FIG. 1 illustrates a video encoder 100 in accordance with one embodiment of the present disclosure. Video encoder 100 is a data processing device generally configured to encode raw video information into one or more encoded video streams. To illustrate, video encoder 100 can be part of a video conferencing system that includes multiple conferencing nodes. One or more of the conferencing nodes can provide to the video encoder 100 a video signal representing raw video information captured at a video capture device, such as a digital video camera. Video encoder 100 can encode the raw video data using scalable video coding and provide the resulting SVC encoded video stream to a communication interface for communication to other conferencing nodes.

Video encoder 100 includes a multiplexer 102, an upscaler 103, an encoder control module 104, a base/enhancement control module 105, a hardware encoder 106, a software entropy encoder 107, a base/enhancement control module 108, a hardware entropy encoder 109, and a base/enhancement layer combiner 110. The multiplexer 102 includes a plurality of inputs, whereby each input receives a corresponding video stream, labeled "S1", "S2", "S3", and "S4." Multiplexer 102 also includes an output connected to base/enhancement control module 105 and a control input connected to encoder control module 104. Base/enhancement control module 105 includes connections to upscaler 103 and hardware encoder 106. Upscaler 103 includes a connection to an input of the multiplexer 102 to provide the video stream S4. Hardware encoder 106 includes a connection to base/enhancement control module 108, which includes connections to software entropy encoder 107 and hardware entropy encoder 109. Base/enhancement layer combiner 110 also includes connections to software entropy encoder 107 and hardware entropy encoder 109.

The video streams S1-S3 are video information streams extracted by the video encoder 100 from a received video signal (not shown). In an embodiment, the video signal can represent video information stored in a recording medium, such as an optical or magnetic disk, magnetic tape, or other media. In another embodiment, the video signal can be received via a communication network, such as a local area network or wide area network. Each of the streams S1-S3 are composed of a series of image frames, and each image frame is composed of a set of pixels. Multiplexer 102 is configured to provide a frame of a selected one of the video streams S1-S4 at its output based on information received at the control input.

The encoder control module 104 provides control information to the control input of the multiplexer 102 to select the next frame for encoding. In particular, by selecting a designated stream via the control information, encoder control module 104 causes multiplexer 104 to provide a frame of the designated video stream at its output. In an embodiment, encoder control module 104 selects the video streams in a round robin fashion. In another embodiment, the encoder control module can determine which streams have frames available for processing, and select those streams in a pre-defined or reprogrammable order.

The base/enhancement control module 105 is configured to route a received frame based on whether the frame is to be encoded in the base layer of the SVC video stream or an enhancement layer of the SVC video stream. The base/enhancement control module 105 can make the determination based on information received from a control module (not shown), such as a processor, based on information in the received frame itself, based on the time the frame was received, based on the location of the frame in the associated video stream, or a combination thereof. In response to determining the received frame is to be encoded in the base layer, base/enhancement control module 105 provides the frame to the hardware encoder 106. In response to determining the received frame is to be encoded in an enhancement layer, the base/enhancement control module 105 determines whether the frame has been upscaled, based on information received from a control module, information stored within the frame itself, or a combination thereof. If it determines that the frame has not been upscaled, the base/enhancement control module 105 provides the frame to the upscaler 103. If the base/enhancement control module 105 determines that the frame has been upscaled, it provides the frame to the hardware encoder 106.

The upscaler 103 is configured to upscale a received frame, thereby increasing the number of pixels that represent the frame. Upscaler 103 can upscale by interpolating pixel values, by repeating pixel values, or by using another upscaling technique. The upscaling technique and amount of upscaling can be predefined, can be indicated by control information received from a control module, or can be indicated by information contained within the frame.

Hardware encoder 106 includes one or more hardware encoding modules to encode received frames into encoded video information. In an embodiment, the hardware encoder encodes the received frames in accordance with a specified encoding technique, such as the H.264 encoding standard. In another embodiment, the encoding technique employed by the hardware encoder 106 is reprogrammable, and is based on control information provided by a control module.

The base/enhancement control module 108 is configured to route received encoded video information based on whether the received information is enhancement layer information or base layer information. In response to determining the received encoded video information is enhancement layer information, the base/enhancement control module 108 provides the encoded video information to the software entropy encoder 107. In response to determining the received encoded video information is base layer information, the base/enhancement control module 108 provides the encoded video information to the hardware entropy encoder 109.

Software entropy encoder 107 is a software routine executed on a processor (not shown). The software entropy encoder 107 entropy encodes received encoded video information according to an associated entropy encoding technique. Hardware entropy encoder 109 is a hardware module dedicated to entropy encoding received encoded video information according to an associated entropy encoding technique. In an embodiment, the entropy encoding implemented by the software entropy encoder 107 differs from the entropy encoding by the hardware entropy encoder 109. For example, the software entropy encoder 107 and hardware entropy encoder 109 can implement different entropy encoding processes, or can implement the same entropy encoding process with different encoding parameters.

The base/enhancement layer combiner combines received enhancement layer information and base layer information to form an SVC video stream. The SVC video stream is provided at an output of the video encoder 110 for provision to a communication interface or for storage.

In operation, the video encoder 102 encodes base layer information and enhancement layer information using two different encoding paths. In particular, the video encoding path for base layer information includes the hardware encoder 106 and the hardware entropy encoder 109. In contrast, the video encoding path includes the hardware encoder 106 and the software entropy encoder 107, and does not include the hardware entropy encoder 109. Accordingly, both of the video encoding paths include the hardware encoder 106. By employing the hardware encoder 106 for encoding of both the base layer and the enhancement layers of an SVC video stream, the efficiency of the encoding process is improved. For example, conventional SVC encoders typically employ software, rather than dedicated software modules to encode enhancement layer information. This can slow the encoding process relative to using dedicated hardware modules.

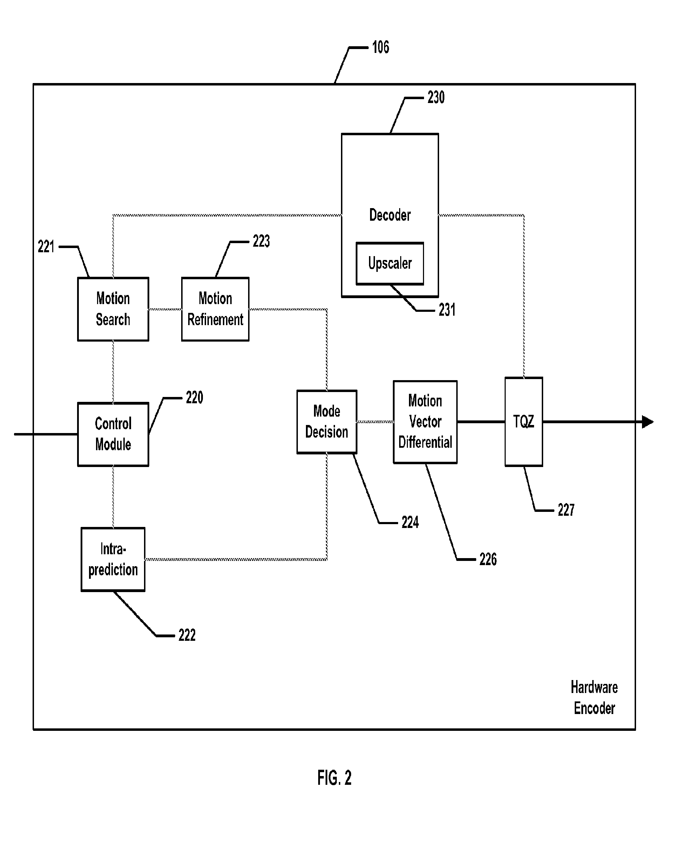

FIG. 2 illustrates the hardware encoder 106 of FIG. 1 in accordance with one embodiment of the present disclosure. The hardware encoder 106 includes a control module 220, a motion search (MS) module 221, an intra-prediction (IP) module 222, a motion refinement (MR) module 223, a mode decision (MD) module 224, a motion vector differential (MVD) module 226, a transform, quantization, and zig-zag (TQZ) module 227. The hardware encoder 106 also includes a decoder 230. The control module 220 includes an input to receive image frames, and connections to the MS module 221 and to the IP module 222. The MS module 221 also includes connections to the MR module 223 and to the decoder 230. The MR module 223 and the IP module 222 each include connections to the MD module 224, which also includes a connection the MVD module 226. MVD module 226 includes a connection to TQZ module 227. TQZ module 227 includes a connection to the decoder 230, and an output to provide encoded video information. In another embodiment, each of the illustrated modules is connected to the other modules via a common bus.

The control module 220 receives image frames and routes video information based on the frames to one or both of the MS module 221 and the IP module 222. The MS module 221 is configured to process image frames received from the control module 220 based on a segmentation into macroblocks of pixel values, such as of 16 pixels by 16 pixels size, from the columns and rows of a frame and/or other control information. In an embodiment, the MS module 221 determines, for each macroblock or macroblock pair of a frame one or more motion vectors that represents the displacement of the macroblock (or subblock) from a reference frame or reference field of the video signal to a current frame or field. In operation, the motion search module operates within a search range to locate a macroblock (or subblock) in the current frame or field to an integer pixel level accuracy such as to a resolution of 1-pixel. Candidate locations are evaluated based on a cost formulation to determine the location and corresponding motion vector that have a most favorable (such as lowest) cost.

The motion refinement module 223 is configured to generate a refined motion vector for each macroblock of the plurality of macroblocks, based on a received motion search motion vector. In an embodiment the MR module determines, for each macroblock or macroblock pair of a frame, a refined motion vector that represents the displacement of the macroblock from a reference frame or reference field of the video signal to a current frame or field.

Based on the pixels and interpolated pixels, the MR module 223 refines the location of the macroblock in the current frame or field to a greater pixel level accuracy such as to a resolution of 1/4-pixel or other sub-pixel resolution. Candidate locations are also evaluated based on a cost formulation to determine the location and refined motion vector that have a most favorable (such as lowest) cost

The IP module 222 generates an intra-prediction mode for each macroblock of the plurality of macroblocks. In an embodiment IP module 222 operates as defined by the H.264 standard, however, other intra-prediction techniques can likewise be employed. In particular, intra-prediction module 222 evaluates a plurality of IP modes such as an Intra-4.times.4 or Intra-16X16, which are luma prediction modes, chroma prediction (8X8) or other intra coding, based on motion vectors determined from neighboring macroblocks to determine the intra-prediction mode and the associated cost.

The mode decision module 212 determines a final macroblock cost for each macroblock of the plurality of macroblocks based on costs associated with the refined motion vector, the direct mode motion vector, and the best intra prediction mode, and in particular, the method that yields the lowest cost, or an otherwise specified cost.

The MVD 226 module is configured to determine differences between received motion vectors. The differential information can be employed for subsequent entropy encoding of the encoded video information.

The TQZ module 220 generates an encoded video signal by transforming, coding, quantizing, and zig-zag encoding residual pixel values into quantized transformed coefficients that can be further coded, such as by entropy coding. The decoder 230 is configured to decode the encoded video information provided by the TQZ module 227 and provide the decoded video information to the MS module 221.

The decoder 230 is a video decoder module configured to decode video information provided by the TQZ module 227 and provide the decoded video information to the MS module 221. This allows the MS module 221 to reduce errors in the video encoding. In the illustrated embodiment, the decoder 230 includes an upscaler 231, which is employed by the decoder 230 to perform video decoding. In an embodiment, the upscaler 231 employs the same hardware modules as the upscaler 103 of FIG. 1. By using the same upscaler both for video decoding and for upscaling image frames associated with enhancement layers overall area of the video encoder 100 can be reduced.

In an embodiment, the hardware encoding modules illustrated in FIG. 2 are configured to operate concurrently to generate encoded video information based on different received frames. Accordingly, each of the hardware encoding modules can be operating on image frame information associated with a different video stream. For example, at a particular point in time, the IP module 222 can be processing an image frame associated with stream S1, while at the same point in time the MVD module is processing an image frame, or information based on an image frame, associated with stream S4. Further, the hardware encoding modules of hardware encoder 106 can concurrently process video information for both the base layer and the enhancement layer of an SVC encoded video signal. Thus, for example, the MD module 212 can process video information associated with the base layer concurrently with the MS module 221 processing video information associated with the enhancement layer.

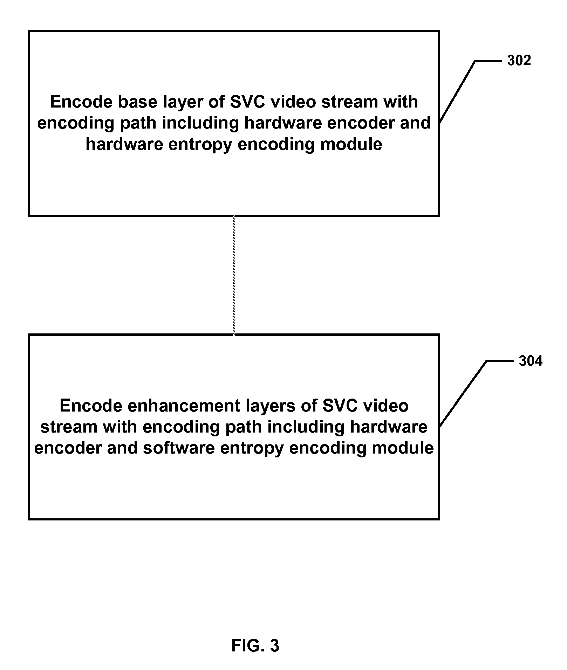

FIG. 3 illustrates a flow diagram of a method of operating the video encoder 100 in accordance with one embodiment of the present disclosure. At block 302 the video encoder 100 encodes the base layer of an SVC video stream using an encoding path that includes the hardware encoder 106 and the hardware entropy encoder 109. At block 304 the video encoder 100 encodes one or more enhancement layers of the SVC video stream using an encoding path that includes the hardware encoder 106 and the software entropy encoder 107, and does not include the hardware entropy encoder 109.

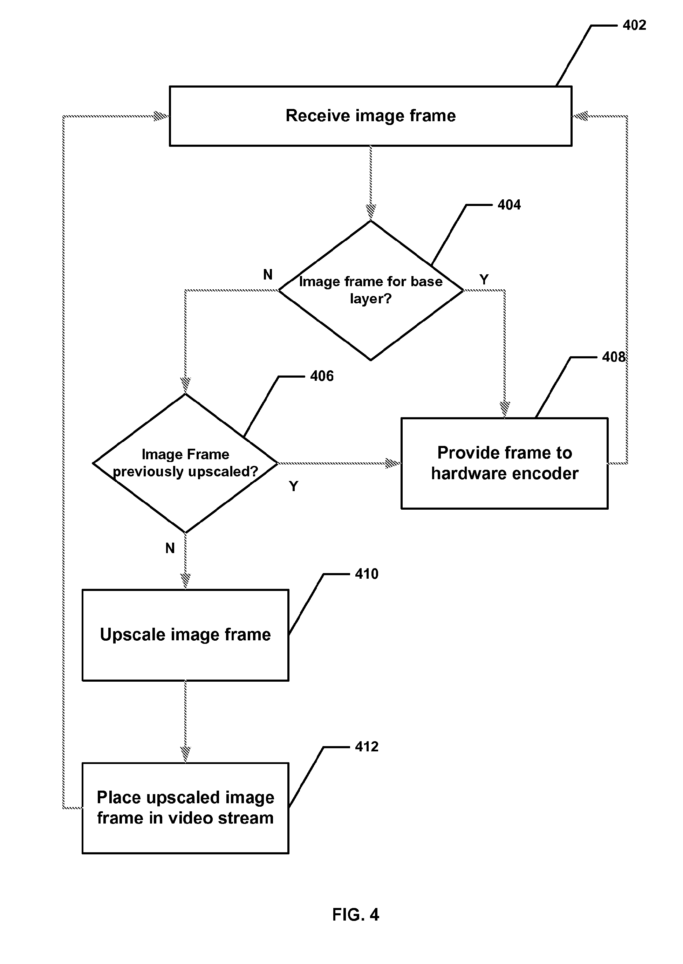

FIG. 4 illustrates a method of routing received image frames at the base/enhancement control module 105 of FIG.1 in accordance with one embodiment of the present disclosure. At block 402 the base/enhancement control module 105 receives an image frame from the multiplexer 102. At block 404, the base/enhancement control module 105 determines whether the image frame is to be encoded in the base layer of the SVC video stream or in one of the enhancement layers. In response to determining the received frame is to be encoded in the base layer, the base/enhancement control module 105 provides the frame to the hardware encoder 106 at block 408. In response to determining the image frame is to be encoded in one of the enhancement layers, the method flow proceeds to block 406 and the base/enhancement control module 105 determines whether the image frame has previously been upscaled. If so, the method flow proceeds to block 408 and the base/enhancement control module 105 provides the previously-upscaled image frame to the hardware encoder 106 for encoding. If the image frame has not been previously upscaled, the method flow proceeds to block 410 and the base/enhancement control module 105 provides the frame to upscaler 103, which upscales the frame. At block 103 the upscaler 103 places the upscaled frame in video stream S4, where it is available for selection at the multiplexer 102.

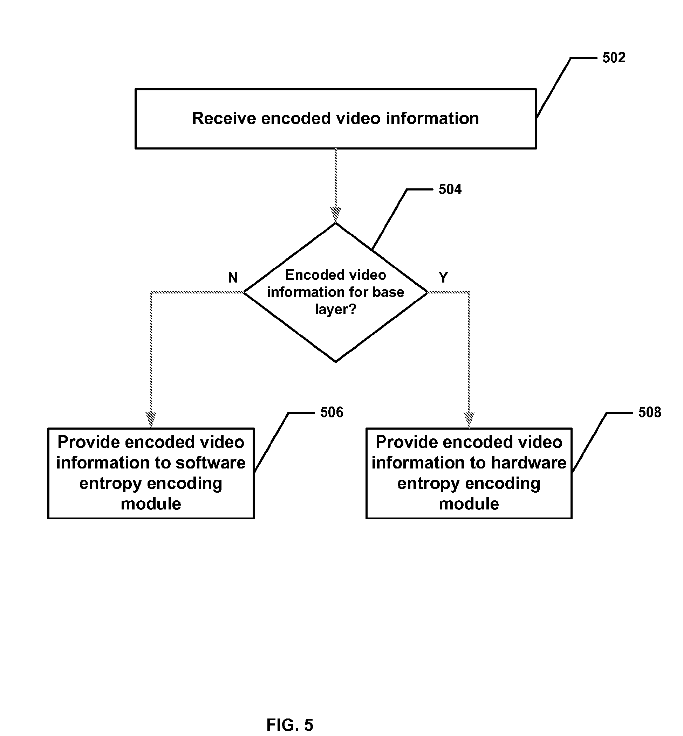

FIG. 5 illustrates a method of routing encoded video information at the base/enhancement control module 108 in accordance with one embodiment of the present disclosure. At block 502 the base/enhancement control module 108 receives encoded video information. At block 504 the base/enhancement control module 108 determines whether the received information is to be encoded in the base layer or one of the enhancement layers of the SVC video stream. If the received encoded video information is to be encoded in one of the enhancement layers, the method flow proceeds to block 506 and the base/enhancement control module 108 is provided to the software entropy encoder 107 for entropy encoding. If the received encoded video information is to be encoded in the base layer, the method flow proceeds to block 508 and the base/enhancement control module 108 is provided to the hardware entropy encoder 109 for entropy encoding.

Other embodiments, uses, and advantages of the disclosure will be apparent to those skilled in the art from consideration of the specification and practice of the disclosure disclosed herein. The specification and drawings should be considered exemplary only, and the scope of the disclosure is accordingly intended to be limited only by the following claims and equivalents thereof.

## Claims

1. A method comprising:
encoding (302) a base layer of a scalable video coding stream with a first encoding path, the first encoding path including a first hardware encoding module;
encoding (304) an enhancement layer of the scalable video coding stream with a second encoding path different from the first encoding path, the second encoding path including the first hardware encoding module.

2. The method of claim 1, further comprising:
receiving a first image frame;
in response to determining (404) the first image frame is to be encoded (302) as a portion of the base layer, providing (408) the first image frame to the first hardware encoding module via a first input and encoding the first image frame as a base layer frame;
in response to determining the first image frame is to be encoded as a portion of the enhancement layer, upscaling (410) the first image frame and providing the upscaled first image frame to the first hardware encoding module via the first input.

3. The method of claim 2, further comprising:
receiving encoded information from an output common to both the first encoding path and the second encoding path;
in response to determining the encoded information is base layer information, further encoding the encoded information according to a first entropy encoding process;
in response to determining the encoded information is enhancement layer information, further encoding the enhancement layer by processing the encoded information according to a second entropy encoding process.

4. The method of claim 1, 2, or 3, further comprising:
receiving encoded information from an output common to both the first encoding path and the second encoding path ;
in response to determining the encoded information is base layer information, further encoding the encoded information according to a first entropy encoding process;
in response to determining the encoded information is enhancement layer information, further encoding the enhancement layer by processing the encoded information according to a second entropy encoding process.

5. The method of claim 4, wherein processing the encoded information according to the first entropy encoding process comprises processing (508) the encoded information at a hardware entropy encoding module.

6. The method of claim 4 or 5, wherein processing the encoded information according to the second entropy encoding process comprises processing (506) the encoded information at a software entropy encoding module.

7. The method of any preceding claim, wherein the first encoding path and the second encoding path both include a second hardware encoding module.

8. The method of any preceding claim, wherein the first hardware encoding module is to one or more of:
predict an intra-prediction mode;
determine a plurality of motion vectors for video information received at an input;
determine a second motion vector based on a first motion vector received at an input;
determine quantized coefficients based on pixel values received at an input; and/or
determine differences between motion vectors received at one or more inputs.

9. A device, comprising:
a first encoding path including a first hardware encoding module (106), the first encoding path to encode a base layer of a scalable video stream; and
a second encoding path including the first hardware encoding module, the second encoding path to encode an enhancement layer of the scalable video stream.

10. The device of claim 9, further comprising:
a first control module (105) comprising an input to receive an image frame, the control module to:
in response to determining the image frame is to be encoded in the base layer, encode the base layer by providing the image frame to the first hardware encoding module via a first input;
in response to determining the image frame is to be encoded in the enhancement layer, encoding the enhancement layer by upscaling the image frame and providing the upscaled image frame to the first hardware encoding module via the first input.

11. The device of claim 10, further comprising:
a second control module to receive encoded information from an output associated with the first encoding path and the second encoding path, the second control module to:
in response to determining the encoded information is associated with the base layer, provide the encoded information to a first entropy encoding process;
in response to determining the encoded information is associated with the enhancement layer, provide the encoded information to a second entropy encoding process, the second entropy encoding process different from the first entropy encoding process.

12. The device of any of claims 9 to 11, further comprising:
a control module to receive encoded information from an output associated with the first encoding path and the second encoding path, the control module to:
in response to determining the encoded information is associated with the base layer, provide the encoded information to a first entropy encoding process;
in response to determining the encoded information is associated with the enhancement layer, provide the encoded information to a second entropy encoding process, the second entropy encoding process different from the first entropy encoding process.

13. The device of claim 12, wherein the first entropy encoding process is performed at a second hardware encoding module (109) and the second entropy encoding process is performed at a software encoding module (107).
